# FASCICULE DE BREVET EUROPEEN

(11) **EP 3 283 747 B1**
(45) Date de publication et mention de la délivrance du brevet: **09.09.2020**
(21) Numéro de dépôt: 16733133.9
(22) Date de dépôt: 14.04.2016
(51) Int. Cl.: F02C 7/36, B64D 35/06

(54) **TURBOMOTEUR A DOUBLET D'HELICES CONTRAROTATIVES DISPOSE EN AMONT DU GENERATEUR DE GAZ**
TURBOMASCHINE MIT EINEM DEM GASGENERATOR VORGESCHALTETEN PAAR VON GEGENLÄUFIGEN PROPELLERN
TURBOMACHINE WITH COUNTER ROTATING PROPELLERS UPSTREAM OF THE GAS GENERATOR

(30) Priorité: 17.04.2015 FR 1553471; 17.04.2015 FR 1553470
(43) Date de publication de la demande: 21.02.2018
(73) Titulaire: Safran Aircraft Engines, 75015 Paris (FR)
(72) Inventeur: ESCURE, Didier, René, André, 77550 Moissy-Cramayel (FR); BERSOT, Jean-François, Endy, 77550 Moissy-Cramayel (FR); BOUDEBIZA, Tewfik, 77550 Moissy-Cramayel (FR); CHARIER, Gilles, Alain, 77550 Moissy-Cramayel (FR); NGUYEN VAN, Thomas, Julien, 77550 Moissy-Cramayel (FR); REIGNER, Pierre-Alain, Jean Philippe, 77550 Moissy-Cramayel (FR)
(74) Mandataire: Gevers & Orès
(86) Numéro de dépôt international: PCT/FR2016/050874
(87) Numéro de publication internationale: WO 2016/166487

(56) Documents cités:
- EP-A2- 2 774 852
- US-A- 4 817 382
- US-A1- 2010 155 526
- US-A1- 2013 039 764
- US-A1- 2013 045 102
- US-B2- 8 753 084

## Description

### DOMAINE TECHNIQUE

La présente invention concerne le domaine de la propulsion aéronautique. Elle vise un moteur à doublet d'hélices entraîné par une turbomachine à turbine à gaz.

### ETAT DE L'ART

Les moteurs à doublet d'hélices sont désignés dans le domaine par les expressions « open rotor » ou moteur à soufflante non carénée, « unducted fan » en anglais. Ils se distinguent en effet des turboréacteurs multiflux par l'utilisation d'une hélice au lieu d'une soufflante. Celle-ci est par ailleurs formée de deux hélices coaxiales contrarotatives. Le développement de ces moteurs porte sur une architecture où les hélices sont soit à l'arrière du générateur de gaz et désignée « pusher », soit à l'avant de ce dernier et désignée « puller ». L'invention vise notamment un moteur de ce dernier type.

L'art antérieur montre pour ce cas que les hélices, formant le propulseur, et le générateur de gaz sont coaxiaux, dans le prolongement l'un de l'autre. Le moteur est dit en ligne.

Plusieurs éléments ou paramètres sont à prendre en considération dans l'adoption d'une architecture selon ce schéma, tels que le mode d'entraînement du propulseur formé des deux hélices, le rapport de moyeu des hélices et la disposition de la manche d'entrée d'air.

L'entraînement des hélices par la turbine de puissance couplée au générateur de gaz, tournant à une vitesse plus élevée que les hélices, est effectué au travers d'un réducteur de vitesse différentiel. Les régimes, le rapport de couple et le rapport de régime entre les hélices contrarotatives d'un open rotor sont issus d'une optimisation aéro-acoustique. Pour un réducteur différentiel, le rapport des couples entre les hélices dépend du rapport de réduction - en général un rapport de réduction compris entre 7,5 et 12. La masse de la transmission différentielle est liée à la taille des roues. Pour un rapport donné, on peut jouer sur le module des dents mais de manière limitée, on a donc un nombre de configurations limité et qui sont éloignées du rapport voulu et/ou d'une masse optimisée.

Le régime de la turbine de puissance sélectionné est une conséquence de la combinaison du rapport de réduction et des régimes des hélices et peut ne pas être compatible avec l'objectif de durée de vie ou aboutir à une turbine sous optimisée en raison d'une masse élevée. Inversement, le respect de cette spécification peut amener à une situation aéro-acoustique non optimisée en l'absence de degré de liberté supplémentaire lors de la définition des caractéristiques du moteur.

La réduction du rapport de moyeu des hélices - rapport entre le diamètre du moyeu et celui des hélices - est favorable en termes de performance du moteur ou de la masse celui-ci.

A iso diamètre, elle permet une réduction de la charge aérodynamique des hélices et par voie de conséquence une augmentation du rendement.

A iso charge aérodynamique, elle permet une réduction du diamètre des hélices et par voie de conséquence une réduction de la masse.

L'entrée d'air peut être agencée de différentes manières.

L'entrée d'air du moteur peut être aménagée en amont des hélices avec une ouverture centrale et un canal annulaire entre le moyeu et une couronne supportant les pales des hélices, comme cela est illustré dans la demande de brevet FR 2951502 au nom de la demanderesse. Cependant, la présence de bras tournants dans le canal d'entrée d'air entraîne une perte de charge qui a une incidence défavorable sur les performances du générateur de gaz.

L'entrée d'air peut être aménagée entre les deux hélices sous la forme d'un canal annulaire. Les demandes de brevet FR 2998867 ou FR 3001264 au nom de la demanderesse en représentent un exemple, voir figure 1. Cependant dans la mesure où le rayon du canal annulaire est élevé puisqu'à la périphérie du moteur, la hauteur disponible de l'ouverture est faible. Il s'ensuit une épaisseur de couche limite significative qui est défavorable en termes de rendement. En outre, le flux d'air admis est sujet à des phénomènes de distorsion en cas de dérapage ou d'incidence forte de l'aéronef. Enfin, cette disposition entraîne une augmentation du rapport de moyeu de l'hélice aval qui est défavorable en termes de masse et de performance.

L'entrée d'air peut être aménagée derrière les hélices et avoir une forme annulaire ou bilobée. Avec une forme annulaire, on retrouve le même impact aérodynamique que précédemment. Avec une forme bilobée, on bénéficie d'une hauteur d'ouverture plus élevée et donc plus favorable en termes de rendement mais on constate une distorsion de l'écoulement plus élevée en cas de dérapage ce qui a un impact sur l'opérabilité du compresseur du générateur de gaz.

L'entrée d'air peut être aménagée derrière les hélices et avoir une forme mono lobée. Cela permet d'augmenter la hauteur de la veine et d'éviter les problèmes aérodynamiques rencontrés dans les autres solutions mais cet agencement impose un certain profil aérodynamique qui rend l'intégration d'un réducteur de vitesse tributaire d'un allongement significatif du moteur. L'entrée d'air permet de contourner la transmission différentielle mais sa taille dépend du rayon de la couronne de la transmission différentielle. Cet allongement vient au détriment de la masse tout en induisant une distorsion de carcasse et des performances diminuées.

Dans une architecture avec propulseur à doublet d'hélices amont, il importe également de porter une attention à l'agencement des servitudes. Chaque hélice, étant à calage variable, comporte un mécanisme de variation du pas des pales avec un vérin d'entraînement en rotation des pivots. Il faut pouvoir alimenter en servitudes fluidiques et électriques les différents vérins amont. Il faut faire passer ces servitudes depuis un repère fixe, lié au carter structural, vers un repère tournant au niveau des hélices. En particulier, l'alimentation en fluide doit passer au travers d'un système de transfert d'huile qui génère beaucoup de fuites. En outre, faire passer les servitudes électriques depuis un repère fixe vers un repère tournant impose de mettre en place un transformateur tournant. Enfin, il est souhaitable aussi de ne pas avoir à traverser de veine d'air en raison des pertes de charge induites.

Les documents US 2010/155526 A1 et US 2013/039764 A1 décrivent un moteur comportant un propulseur avec un doublet d'hélices contrarotatives.

Le présent déposant s'est fixé comme premier objectif la réalisation d'un moteur à doublet d'hélices amont dont la transmission de puissance entre la turbine de puissance et le doublet d'hélices permet une adaptation aisée entre un mécanisme réducteur de vitesse et la turbine qui l'entraîne.

Un second objectif vise un moteur dont l'entrée d'air est à la fois peu sensible aux variations d'incidence de l'aéronef et induit une perte de charge aussi faible que possible.

Un autre objectif vise la réalisation d'un moteur dont l'agencement du propulseur permet un rapport de moyeu faible.

Un autre objectif porte sur l'agencement optimal des servitudes alimentant les mécanismes de changement de pas des pales des hélices.

Un autre objectif est de réaliser un moteur dont l'entrée d'air est à la fois peu sensible aux variations d'incidence de l'aéronef et induit une perte de charge aussi faible que possible pour une longueur de moteur aussi faible que possible.

### EXPOSE DE L'INVENTION

On parvient à réaliser ces objectifs, conformément à l'invention avec un moteur comportant un doublet d'hélices contrarotatives, un générateur de gaz alimentant une turbine de puissance, le doublet d'hélices étant entraîné en rotation par l'arbre de la turbine de puissance au travers d'un réducteur de vitesse, l'axe de rotation du doublet d'hélices étant non coaxial par rapport à celui de la turbine de puissance, le réducteur de vitesse comprenant un train d'engrenages différentiel et un premier étage comprenant un train d'engrenages simple entre l'arbre de turbine et le train d'engrenages différentiel, l'entrée d'air du moteur comprenant une manche d'entrée d'air, la manche d'entrée d'air étant en forme de lobe adjacent à l'ensemble formé par le train d'engrenages simple et le train d'engrenages différentiel.

Ainsi, par la combinaison d'un décalage des arbres et d'une manche d'entrée d'air adjacente au réducteur de vitesse :
- On améliore les conditions d'accès pour la maintenance des principaux modules que sont le générateur de gaz et le propulseur.
- L'entrée d'air mono lobée décalée permet d'améliorer les performances aérodynamiques de l'entrée d'air et d'intégrer facilement un piège à particules.
- L'intégration de la configuration externe est plus aisée ; le moteur dispose d'un volume plus spacieux pour loger les équipements (AGB, pompe....), qui par ailleurs est agencé dans une partie froide.
- L'installation du moteur, de type turbopropulseur, est possible, avec l'avantage par rapport à un moteur en ligne, d'avoir une garde au sol augmentée, à même diamètre hélice.
- On peut s'affranchir des carters tournants à grand diamètre présents sur les autres architectures de moteur car il n'y a pas de veine d'air traversant le moyeu. Il s'ensuit une réduction de masse importante.
- On réduit la longueur du moteur par rapport aux moteur en ligne - dans la mesure où au moins 80% de l'encombrement axial de la transmission est pris sur l'encombrement de la manche d'entrée d'air - tout en respectant la contrainte de maintenir une faible déviation de l'air entre la manche d'entrée et l'entrée du compresseur. Cela se traduit par un gain en poids.

L'ensemble formé par le train d'engrenage simple et le train d'engrenages différentiel est situé de préférence d'un même côté de la manche d'entrée d'air, notamment au-dessus de la manche d'entrée d'air en configuration opérationnelle du moteur.

Selon l'invention, le premier étage à train d'engrenage simple comprend une première roue dentée, solidaire de l'arbre de turbine, ladite première roue dentée engrenant avec une deuxième roue dentée du premier étage, ladite deuxième roue dentée étant montée rotative autour de l'axe du doublet d'hélices. La première roue dentée engrène de préférence directement avec la deuxième roue dentée, sans élément intermédiaire entre la première et la deuxième roue dentée.

L'ensemble formé par le train d'engrenage simple et le train d'engrenages différentiel est de préférence situé, notamment longitudinalement au moteur, entre le doublet d'hélices et le générateur de gaz. En particulier, l'ensemble formé par le train d'engrenage simple et le train d'engrenages différentiel peut être situé en aval de l'hélice aval et en amont du générateur de gaz.

L'angle entre l'axe de la turbine de puissance et la droite reliant le sommet du compresseur du générateur de gaz au coude interne de la manche d'entrée d'air est de préférence compris entre 20 et 60°.

Le train d'engrenages différentiel peut comprendre une entrée du côté de la turbine de puissance et deux sorties, chacune entraînant un rotor d'hélice.

Conformément à une autre caractéristique, le premier étage comporte une roue reliée à un engrenage planétaire du train d'engrenages différentiel.

Par cette caractéristique, l'invention :
- permet de disposer d'un degré de liberté supplémentaire lorsqu'il s'agit de déterminer les régimes et couples hélices par rapport à la turbine de puissance. En effet dans une transmission différentielle, le rapport des couples entre les deux sorties est lié au rapport de réduction entrée/sortie. Avec cet étage supplémentaire, il est permis d'optimiser les caractéristiques de la turbine de puissance. Une turbine de puissance rapide a une masse moindre car on peut diminuer son rayon moyen et son intégration en est également facilitée. Cet étage supplémentaire permet également d'avoir plus de liberté pour réduire la masse du différentiel. Dans ce but plusieurs solutions peuvent être explorées et combinées : augmenter le rapport de réduction pour diminuer le diamètre du planétaire central, diminuer le diamètre des satellites ou optimiser le rapport de réduction global pour diminuer la masse totale des roues.

Le rapport entre les couples de l'hélice aval et de l'hélice amont est fixé par des paramètres aérodynamiques et acoustiques de manière à avoir un rendement propulsif optimal du doublet d'hélices. Le rapport de réduction global est différent du rapport de réduction de la transmission différentielle. On cherche à avoir un rapport de réduction global entre 8 et 15 et un rapport de réduction sur la partie différentielle entre 6 et 11. Le rapport de la transmission global est compris entre 0,5 et 2 du rapport de réduction de la transmission différentielle. On choisit préférentiellement un rapport multiplicateur pour le train d'engrenages simple de manière à avoir les rapports de vitesse corrélés au rapport de couple précité. En particulier, on cherche à avoir un différentiel avec un plus fort rapport de réduction pour limiter son poids.

Parallèlement, le train d'engrenages simple produit un décalage entre les axes du propulseur et du générateur. Ce décalage permet d'assurer une optimisation de la modularité entre le propulseur et le générateur de gaz ainsi qu'un faible rapport de moyeu au niveau des hélices, rendu possible par l'absence de veine interne dans le propulseur. Il permet également d'entraîner directement des équipements par le réducteur, par exemple un compresseur de charge.

Au moins l'un du train d'engrenages différentiel et du train d'engrenages simple peut comprendre des roues dentées dédoublées, notamment axialement.

Le train d'engrenages simple peut en particulier comprendre deux roues en parallèle engrenant sur la roue reliée à l'engrenage planétaire.

Par exemple, l'arbre de la turbine peut être solidaire d'une unique roue dentée qui entraîne deux roues en parallèle qui viennent en prise avec une unique roue qui est coaxiale avec la roue planétaire du différentiel qui est dédoublée. Les deux roues du planétaire entraînent les roues satellites elles-mêmes dédoublées axialement comme la couronne.

Selon un mode de réalisation, le train d'engrenages différentiel comprend un engrenage planétaire, un porte-satellites et une couronne, le porte-satellites étant relié à l'hélice amont et la couronne à l'hélice aval du doublet d'hélices.

Selon une variante de réalisation, le train d'engrenages différentiel comprend un engrenage planétaire, un porte-satellites et une couronne, le porte-satellites étant relié à l'hélice aval et la couronne à l'hélice amont du doublet d'hélices.

Plus particulièrement, conformément à une structure intégrée préférée, le moteur comporte une structure fixe avec un manchon, un premier élément d'arbre étant supporté par l'intermédiaire de paliers à l'intérieur du manchon, ledit élément d'arbre reliant la couronne à une hélice du doublet d'hélices.

Conformément à une autre caractéristique, le moteur comprend un second élément d'arbre supporté par des paliers à l'intérieur du premier élément d'arbre, le second élément d'arbre reliant le porte-satellites à l'autre hélice du doublet d'hélices.

Conformément à une autre caractéristique, le moteur comprend un troisième élément d'arbre supporté par des paliers à la structure fixe, ledit élément d'arbre reliant le premier étage de réduction de vitesse à l'engrenage planétaire.

Avantageusement, le moteur comprend un fourreau contenant des servitudes, logé à l'intérieur des éléments d'arbre. Plus particulièrement ce fourreau est fixe.

L'invention permet ainsi le routage des servitudes dans le repère statique, et l'implantation d'un vérin statique. Un tel agencement n'est pas possible dans le cas d'une architecture en ligne. En outre, l'incorporation d'un fourreau dans le propulseur, décalé par rapport au générateur de gaz permet un accès plus aisé.

### DESCRIPTION DES FIGURES

L'invention sera mieux comprise, et d'autres buts, détails, caractéristiques et avantages de celle-ci apparaîtront plus clairement à la lecture de la description explicative détaillée qui va suivre, d'un mode de réalisation de l'invention donné à titre d'exemple purement illustratif et non limitatif, en référence aux dessins schématiques annexés.

Sur ces dessins :
- La figure 1 représente schématiquement en coupe axiale un exemple de moteur conforme à l'invention ;
- La figure 2 représente plus en détail les éléments structurels du mode de réalisation d'un moteur selon l'invention ;
- La figure 3 montre les détails de la figure 2 se rapportant au propulseur ;
- La figure 4 montre une variante de réalisation de l'invention ;
- La figure 5 montre, vu en perspective, un exemple de réducteur avec des roues dentées doubles ;
- La figure 6 montre un autre exemple de réducteur.
- La figure 7 montre le moteur, en perspective, avec la disposition de la manche d'entrée d'air par rapport aux axes décalés.

### DESCRIPTION DETAILLEE

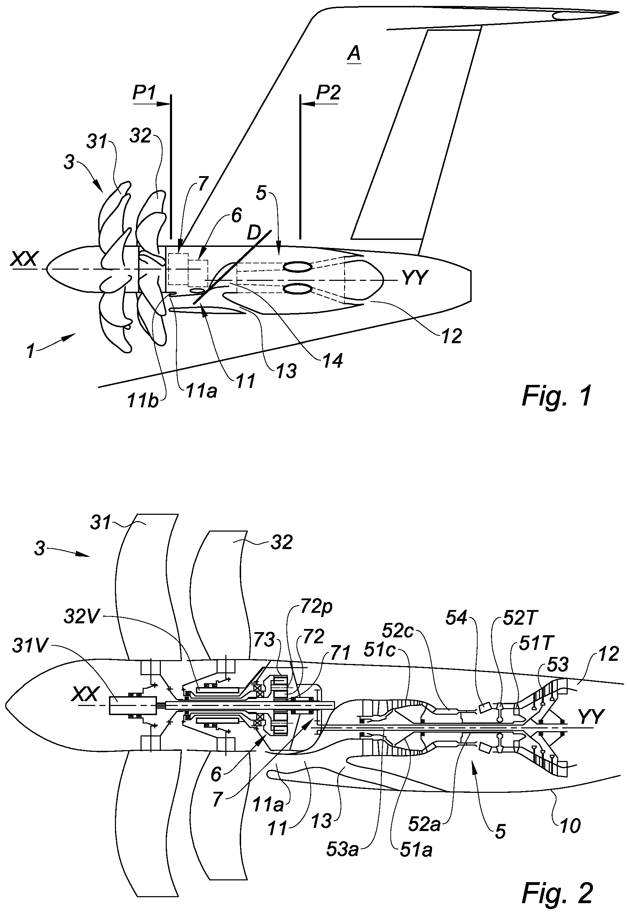

En référence à la figure 1, le moteur 1 est représenté monté sur un aéronef A dans la partie arrière du fuselage. Il est accroché à celui-ci dans deux plans de suspension, un plan P1 en amont et un plan P2 en aval. Il comprend de l'amont vers l'aval, un propulseur 3 formé de deux hélices contrarotatives, 31 et 32, tournant autour d'un axe XX dit axe du propulseur. Vers l'aval, un générateur de gaz 5 est formé d'un moteur à turbine à gaz avec un ensemble de compression, une chambre de combustion et un ensemble de turbines. Les gaz du générateur de gaz 5 sont éjectés dans l'atmosphère par une tuyère d'éjection 12 à l'arrière du moteur. Les arbres du générateur 5 sont coaxiaux et montés rotatifs autour d'un axe YY, dit axe du générateur de gaz. Les axes XX et YY sont décalés l'un par rapport à l'autre. Par rapport à la position sur l'aéronef, sur la figure 1, l'axe XX est positionné au-dessus de l'axe YY ; il permet d'augmenter la distance du sol au propulseur et d'avoir un moteur positionné plus bas sur l'aéronef ou positionné sur un aéronef nécessitant une importante garde au sol.

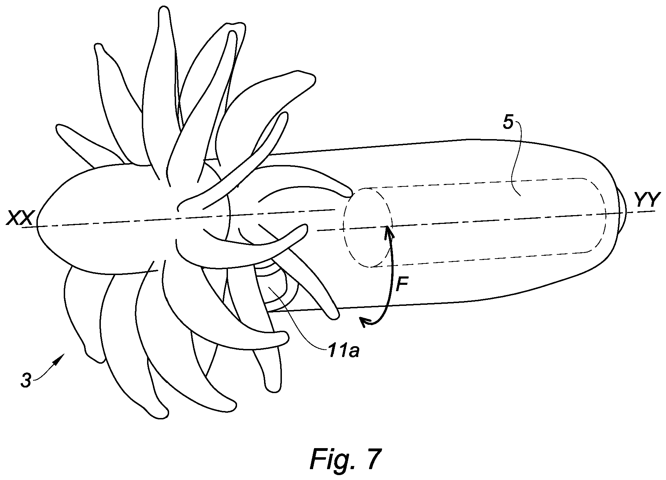

Le décalage permet aussi de monter le moteur sur l'aéronef de manière à rapprocher le générateur de gaz du fuselage pour limiter le porte-à-faux du moteur tout en éloignant les hélices. Dans ce cas les axes seront plutôt à la même hauteur mais décalés horizontalement ou bien décalés en hauteur et horizontalement. La figure 7 montre de façon schématique le moteur de l'invention avec ses deux axes XX et YY et la manche d'entrée d'air dont l'axe est coplanaire avec les deux premiers. La flèche F avec sa double direction illustre comment on peut faire varier la position relative des axes l'un par rapport à l'autre sur l'aéronef en les faisant pivoter l'un par rapport à l'autre.

Une partie de la puissance fournie par le générateur de gaz 5 est transmise par un arbre 53a au propulseur. L'arbre 53a se prolonge vers l'amont et entraîne les rotors 31 et 32 du propulseur au travers d'un réducteur de vitesse comprenant un réducteur différentiel 7 et un premier étage 6 à train d'engrenages simple. Le train d'engrenages est dit simple car les axes de rotation des roues dentées sont fixes.

Le premier étage 6 à train d'engrenages simple comprend selon ce mode de réalisation une roue dentée 61, solidaire de l'arbre 53A, engrenant avec une roue dentée 63, montée rotative autour de l'axe XX du propulseur. Le décalage entre les axes XX et YY correspond à l'écart entre les axes des deux roues 61 et 63. Selon les rayons respectifs des deux roues ce premier étage 6 entraîne une réduction ou une augmentation de vitesse de rotation entre les roues d'entrée et de sortie. Le train d'engrenages est dit simple car les axes sont fixes contrairement au différentiel.

La roue 63 entraîne les roues du réducteur différentiel 7. Ce différentiel comprend une roue planétaire centrale 71, une couronne 73 et entre les deux, les satellites 72 montés sur le porte satellite 72P. Les trois éléments 71, 73 et 72P du différentiel et l'axe XX sont coaxiaux.

Les arbres 31A et 32A des rotors du propulseur sont coaxiaux avec l'axe XX et sont solidaires respectivement avec le porte-satellites 72P et la couronne 73 du réducteur différentiel.

La roue 63 de sortie du premier étage de réduction entraîne, par son arbre, l'arbre de la roue planétaire 71.

Le pas des pales de chacune des hélices est commandé par un vérin schématisé en 31V et 32V respectivement. Par exemple la modification du pas est assurée par l'entraînement par manivelle des pales autour de leur axe. Le brevet FR 3001 264 déposé par la demanderesse décrit un mode de réalisation d'une commande de changement de pas.

Le générateur de gaz 5 est logé dans une nacelle 10 qui comprend une manche d'entrée d'air 11 pour alimenter en air le générateur de gaz. Cette manche d'entrée d'air est adjacente aux réducteurs de vitesse 6 et 7 avec ici un plan 11a d'entrée perpendiculaire à l'axe XX et est agencée de manière à diriger l'air selon une direction parallèle à XX puis à le dévier vers l'entrée du générateur 5. La courbure du conduit d'admission d'air permet l'incorporation d'un piège 13 à particules et d'objets étrangers susceptibles d'endommager le moteur.

Le train d'engrenage simple 6 et le train d'engrenage différentiel 7 sont situés radialement d'un seul côté de la manche d'entrée d'air 11, au-dessus de la manche d'entrée d'air 11. Ainsi, l'axe du conduit d'acheminement de l'air en entrée de la manche 11 est situé sous l'axe YY du générateur de gaz, qui est lui-même situé sous l'axe XX du propulseur.

La déviation de la veine d'air en entrée de moteur est donnée par l'angle entre l'axe YY et la droite D reliant le sommet du compresseur du générateur de gaz au coude interne de la manche d'entrée d'air. Cet angle est choisi en fonction de considérations aérodynamiques entre 20 et 60° pour éviter les distorsions de flux en entrée de compresseur et la pénétration de corps étrangers dans le moteur. Cet angle est déterminé en fonction du compresseur, de la géométrie du moteur et de l'aéronef, etc. La dimension axiale du canal 14 est ainsi déterminée à partir de l'entraxe et de cet angle. On cherche donc à diminuer l'entraxe.

Comme indiqué plus haut, on n'a plus que le rayon de la roue d'entrée à contourner et non plus le rayon de la couronne du différentiel. Préférentiellement, le rayon de la roue d'entrée est au moins deux fois inférieur à celui de la couronne du différentiel. Il est à noter que la couronne présente normalement une denture interne donc un encombrement plus important que la denture externe de la roue d'entrée de l'engrenage simple. Il faut en plus ajouter le dispositif de récupération d'huile mais qui a un encombrement équivalent dans les deux cas.

Il est à noter que le décalage en hauteur des axes permet d'intégrer la manche d'air 11 avec une hauteur d'ouverture plus favorable en termes de perte de charge par rapport aux ouvertures annulaires, car la couche limite dans le canal d'entrée d'air en occupe une partie relativement faible par rapport à l'air frais. La largeur de la manche 11 s'étend sur une portion de cercle, par exemple 90°.

Par ailleurs, de manière avantageuse, la lèvre amont 11b de la manche d'entrée d'air, côté nacelle, est détachée de celle-ci de manière à éviter ou au moins réduire l'ingestion de l'air de la couche limite formée par l'écoulement le long de la nacelle tournante.

De manière avantageuse également, un dispositif de récupération des huiles de lubrification des engrenages du réducteur est logé dans la partie basse du réducteur à proximité de la manche d'entrée d'air. Cette huile de récupération est à une température suffisante pour constituer un moyen de dégivrage de la manche d'air.

Le fonctionnement de ce moteur est le suivant. L'air est guidé par la manche 11 vers le générateur de gaz 5 qui fournit une énergie appropriée pour entraîner la turbine de puissance 53. Les gaz issus de la turbine sont éjectés au travers de la tuyère 12.

L'arbre 53a entraîne en rotation les roues du premier étage 6, la vitesse de rotation de la roue en sortie par rapport à celle de l'arbre 53a est déterminée par le rapport de réduction/ ou d'augmentation défini avec les caractéristiques du moteur.

La roue de sortie du premier étage entraîne le planétaire du différentiel 7 qui met en rotation le porte-satellites et les roues satellites que ce dernier supporte. Ces roues satellites entraînent la couronne en rotation inverse par rapport à celle du planétaire.

L'architecture d'un tel moteur en permet une mise au point lors de son développement en plusieurs étapes. Ce développement comprend :
- une étape d'optimisation aéro-acoustique où l'on fixe la valeur absolue du rapport du couple de l'hélice amont entre 0,8 et 1,5 ou 2 et de la vitesse des hélices. Le rapport de couple fixe le rapport de réduction du différentiel ;
- une étape d'optimisation de la turbine où l'on fixe une vitesse idéale de la turbine en fonction des paramètres de la turbomachine que sont la puissance la forme de la veine et le régime maximal. On en déduit le rapport de réduction global entre la turbine et les hélices. On fixe ainsi le rapport de réduction du réducteur ;
- une étape d'optimisation de la masse de l'ensemble du réducteur et de la taille du décalage entre les axes XX et YY où l'on fait varier le rapport de couple de +/- 10% pour déterminer un point de masse inférieur.

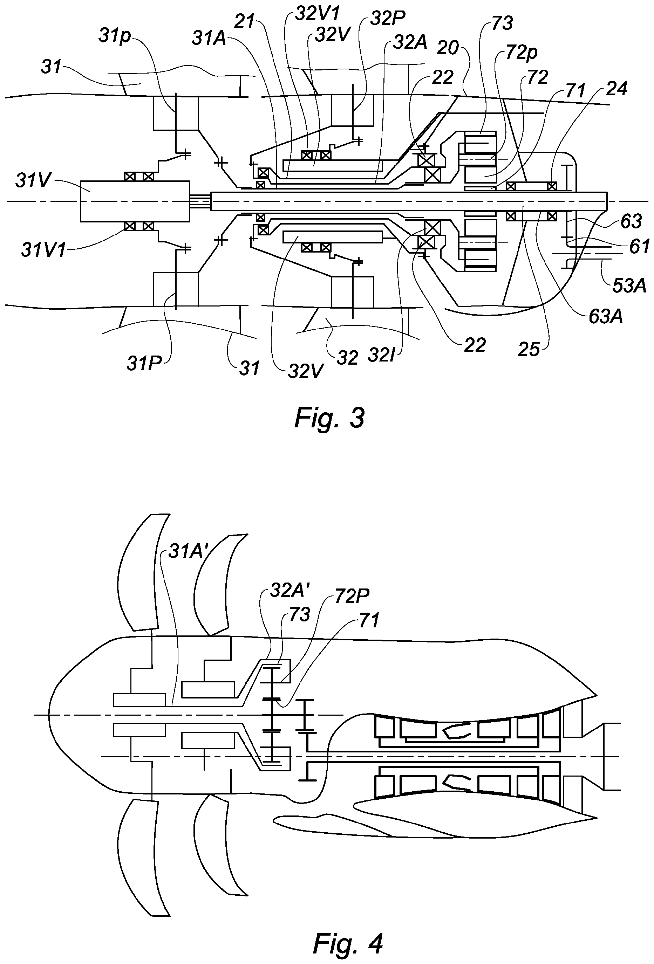

En se reportant aux figures 2 et 3, on a représenté plus en détail un mode de réalisation du moteur.

Le générateur de gaz 5 est formé d'un moteur à turbine à gaz avec un ensemble de compression, une chambre de combustion 54 et un ensemble de turbines. Le générateur est formé ici de trois rotors 51, 52, 53. Les deux rotors 51 et 52 comprennent respectivement, un compresseur 51C, 52C et une turbine 51T, 52T, reliés par un arbre, 51A et 52A. Les arbres du générateur 5 sont coaxiaux et montés rotatifs autour de l'axe YY. La chambre de combustion 54 est disposée entre le compresseur 52C, compresseur haute pression, et la turbine 52T, turbine haute pression. En aval de la turbine 51T, turbine basse pression, une turbine de puissance 53 est montée sur l'arbre 53A coaxial avec les arbres 51A et 52A.

La chambre de combustion 54 est disposée entre le compresseur 52C, compresseur haute pression, et la turbine 52T, turbine haute pression. En aval de la turbine 51T, turbine basse pression, une turbine de puissance 53 est montée sur l'arbre 53a coaxial avec les arbres 51a et 52a.

Le premier étage 6 à train d'engrenages simple comprend selon ce mode de réalisation une roue dentée 61, solidaire de l'arbre 53a, engrenant avec une roue dentée 63, montée rotative autour de l'axe XX du propulseur. Le décalage entre les axes XX et YY correspond à l'écart entre les axes des deux roues 61 et 63. Selon les rayons respectifs des deux roues ce premier étage 6 entraîne une réduction ou une augmentation de vitesse de rotation entre les roues d'entrée et de sortie. Le train d'engrenages est dit simple car les axes sont fixes contrairement au différentiel.

La roue 63 entraîne les roues du réducteur différentiel 7. Ce différentiel comprend une roue planétaire centrale 71, une couronne 73 et entre les deux, les satellites 72 montés sur le porte-satellites 72P. Les trois éléments 71, 73 et 72P du différentiel et l'axe XX sont coaxiaux.

Les arbres 31A et 32A des rotors du propulseur sont coaxiaux avec l'axe XX et sont solidaires respectivement avec le porte-satellites 72P et la couronne 73 du réducteur différentiel.

La roue 63 de sortie du premier étage de réduction entraîne par son arbre l'arbre de la roue planétaire 71.

La turbine entraîne en rotation les roues du premier étage de réduction 6. La vitesse de rotation de la roue en sortie par rapport à celle de l'arbre 53A est déterminée par le rapport de réduction ou d'augmentation défini avec les caractéristiques du moteur.

La roue de sortie du premier étage entraîne le planétaire qui met en rotation le porte-satellites et les roues satellites que ce dernier supporte. Ces roues satellites entraînent la couronne en rotation inverse par rapport à celle du planétaire. Pendant le vol et au sol, les pas des pales sont ajustés par des vérins. Le pas des pales de chacune des hélices est commandé par un vérin schématisé en 31V et 32V respectivement. Par exemple, la modification du pas est assurée par l'entraînement par manivelle des pales autour de leur axe. Le brevet FR 3001 264 déposé par la demanderesse décrit un mode de réalisation d'une commande de changement de pas.

Le schéma de la figure 2 permet de comprendre le fonctionnement du moteur, la figure 3 reprend les mêmes éléments du moteur relatifs à la partie propulseur et montre comment ceux-ci sont intégrés dans la structure.

La structure fixe 20 comprend un ensemble d'éléments de carter formant des supports de paliers. Ainsi, le carter comprend un manchon 21 s'étendant vers l'amont. Ce manchon 21 est coaxial avec les arbres 32A et 31A des deux hélices. Il supporte par l'intermédiaire de paliers 22 l'arbre 32A de l'hélice aval relié à la couronne 73 du réducteur différentiel. Cet arbre 32A est solidaire à son autre extrémité du moyeu de l'hélice 32. On note que le manchon 21 supporte le vérin 32V de commande du pas des pales de l'hélice aval 32. Pour assurer la transmission d'un mouvement de translation de l'organe de commande du vérin fixe 32V, une bague 32v1 est montée avec roulements sur l'organe de commande du vérin. Cette bague est reliée aux biellettes de calage du pivot 32p des pales.

L'arbre 31A relié à l'hélice amont 31 est supporté par l'arbre 32A par l'intermédiaire de paliers inter-arbres 32I. A l'aval, l'arbre 31A est rattaché au porte-satellites 72p.

L'arbre 63A reliant la roue dentée du premier étage 6 à la roue planétaire 71 est supporté par un élément de carter fixe par l'intermédiaire de paliers 24.

Un fourreau 25 fixe est logé à l'intérieur des arbres 63A et 31A. Il relie le vérin 31V de commande du pas des pales de l'hélice amont à une zone située en aval des réducteurs. La fonction de ce fourreau est de servir de guide aux servitudes fluidiques et électriques pour notamment le vérin 31V. Ce vérin est fixe et, comme le vérin 32V, il transmet le mouvement aux pivots 31P des pales de l'hélice amont par l'intermédiaire d'une bague rotative.

Selon un autre mode de réalisation le vérin amont est mobile en rotation autour de l'axe XX. Une étanchéité appropriée est alors prévue entre le vérin et le fourreau.

On a représenté sur la figure 4, une variante de réalisation où l'attachement des arbres des deux hélices a été modifié. L'arbre 32A' est agencé pour être entraîné par le porte-satellites 72P et entraîner à son tour l'hélice aval. L'arbre 31A' est agencé pour être entraîné par la couronne 73 du réducteur différentiel et entraîner l'hélice amont 31.

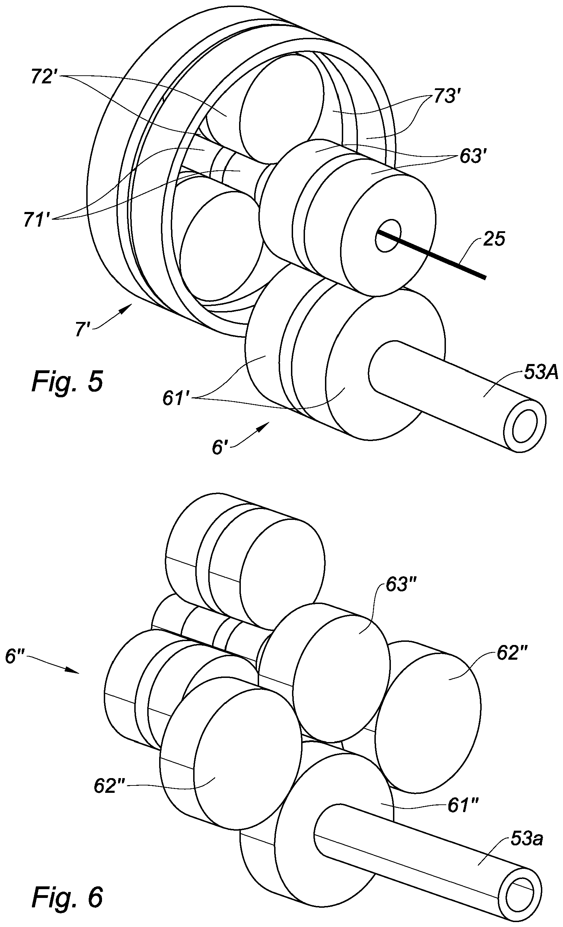

On a représenté sur la figure 5 un exemple de réalisation du premier étage à train d'engrenages simple permettant la transmission d'une densité de puissance élevée grâce à une répartition sur une plus grande surface des efforts appliqués sur les dentures. Dans cet exemple, l'arbre de la turbine 53A est solidaire de deux roues dentées 61' coaxiales qui engrènent simultanément sur deux roues 63' dentées coaxiales. Ces deux roues 63' sont solidaires de deux roues coaxiales 71 formant le planétaire du différentiel 7. De la même façon, les satellites 72' sont dédoublés axialement ainsi que la couronne 73'.

Cet agencement présente l'avantage de répartir le couple transmis entre les deux roues dédoublées, ce qui limite la charge sur les dentures, sans pénaliser le réducteur dans le sens de la longueur.

On a représenté sur la figure 6 une variante de réalisation du réducteur visant le même objectif. Sur cette figure la couronne du différentiel n'a pas été dessinée. On retrouve la roue dentée 61" solidaire de l'arbre 53A. Ici elle entraîne deux roues 62" en parallèle. Ces deux roues sont placées dans un même plan transversal par rapport à l'arbre 53A et viennent en prise avec la roue 63". Cette roue est coaxiale avec la roue planétaire du différentiel qui comme dans l'exemple précédent a été dédoublée. De la même façon les deux roues du planétaires entraînent les roues satellites elles-mêmes dédoublées axialement comme la couronne non dessinée. Cette solution permet de réduire l'encombrement axial du réducteur sans affecter la capacité à transmettre des couples élevés. La longueur du moteur et plus particulièrement sa partie en porte à faux est réduite d'autant.

Un mécanisme d'égalisation de couple entre les deux roues est le cas échéant adjoint à ce train d'engrenages pour éviter une usure prématurée sur un des chemins d'effort.

## Revendications

1. Moteur (1) comportant un propulseur avec doublet d'hélices (31, 32) contrarotatives, un générateur de gaz (5) alimentant une turbine de puissance (53), le doublet d'hélices (31, 32) étant entraîné en rotation par l'arbre (53A) de la turbine de puissance (53) au travers d'un réducteur de vitesse (6, 7), l'axe de rotation (XX) du doublet d'hélices (31, 32) étant non coaxial par rapport à celui (YY) de la turbine de puissance (53), le réducteur de vitesse (6, 7) comprenant un train d'engrenages différentiel (7) et un premier étage (6) comprenant un train d'engrenages simple entre l'arbre de turbine (53A) et le train d'engrenages différentiel (7), l'entrée d'air du moteur (1) comprenant une manche d'entrée d'air (11), la manche d'entrée d'air (11) étant en forme de lobe adjacent à l'ensemble formé par le train d'engrenage simple et le train d'engrenages différentiel (7), le moteur étant **caractérisé en ce que** le premier étage (6) à train d'engrenage simple comprend une première roue dentée (61), solidaire de l'arbre de turbine (53A), ladite première roue dentée (61) engrenant avec une deuxième roue dentée (63) du premier étage (6), ladite deuxième roue dentée (63) étant montée rotative autour de l'axe (XX) du doublet d'hélices .

2. Moteur (1) selon la revendication 1, **caractérisé en ce que** l'ensemble formé par le train d'engrenage simple et le train d'engrenages différentiel (7) est situé d'un même côté de la manche d'entrée d'air (11), notamment au-dessus de la manche d'entrée d'air (11) en configuration opérationnelle du moteur (1).

3. Moteur (1) selon la revendication 1 ou 2, **caractérisé en ce que** l'ensemble formé par le train d'engrenage simple et le train d'engrenages différentiel (7) est situé entre le doublet d'hélices (31, 32) et le générateur de gaz (5).

4. Moteur (1) selon l'une des revendications 1 à 3, **caractérisé en ce que** l'angle entre l'axe (YY) de la turbine de puissance (53) et la droite (D) reliant le sommet du compresseur du générateur de gaz au coude interne de la manche d'entrée d'air (11) est compris entre 20 et 60°.

5. Moteur (1) selon l'un des revendications 1 à 4, **caractérisé en ce que** le premier étage (6) comporte une roue (63) reliée à un engrenage planétaire (71) du train d'engrenages différentiel (7).

6. Moteur (1) selon l'une des revendications 1 à 5, **caractérisé en ce qu'**au moins l'un du train d'engrenages différentiel (7) et du train d'engrenages simple comprend des roues dentées dédoublées, notamment axialement.

7. Moteur (1) selon la revendication 6, **caractérisé en ce que** le train d'engrenages simple comporte deux roues (62") en parallèle engrenant sur la roue reliée à l'engrenage planétaire.

8. Moteur (1) selon l'une des revendications 1 à 7, **caractérisé en ce que** le train d'engrenages différentiel (7) comprend un engrenage planétaire (71), un porte-satellites (72P) et une couronne (73), le porte-satellites étant relié à l'hélice amont (31) et la couronne (73) à l'hélice aval (32) du doublet d'hélices (31, 32).

9. Moteur (1) selon l'une des revendications 1 à 7, **caractérisé en ce que** le train d'engrenages différentiel (7) comprend un engrenage planétaire (71), un porte-satellites (72P) et une couronne (73), le porte satellite étant relié à l'hélice aval (32) et la couronne à l'hélice amont (31) du doublet d'hélices (31, 32).

10. Moteur (1) selon l'une des revendications 1 à 9, **caractérisé en ce qu'**il comporte une structure fixe (20) avec un manchon (21), un premier élément d'arbre (32A) étant supporté par l'intermédiaire de paliers (22) à l'intérieur du manchon, ledit élément d'arbre reliant la couronne à une hélice du doublet d'hélices (31,32) .

11. Moteur (1) selon la revendication 10, **caractérisé en ce qu'**il comprend un second élément d'arbre (31A) supporté par des paliers (32I) à l'intérieur du premier élément d'arbre, le second élément d'arbre reliant le porte-satellites à l'autre hélice du doublet d'hélices (31, 32).

12. Moteur (1) selon la revendication 10 ou 11, **caractérisé en ce qu'**il comprend un troisième élément d'arbre (63A) supporté par des paliers (24) à la structure fixe, ledit élément d'arbre reliant le premier étage de réduction de vitesse à l'engrenage planétaire.

13. Moteur (1) selon l'une des revendications 8 à 12, **caractérisé en ce qu'**il comprend un fourreau (25) contenant des servitudes, logé à l'intérieur des éléments d'arbre.

14. Moteur (1) selon la revendication 13, **caractérisé en ce que** le fourreau est fixe.

## Patentansprüche

1. Motor (1), der ein Triebwerk mit einem Paar gegenläufiger Propeller (31, 32), einen Gasgenerator (5), der eine Leistungsturbine (53) versorgt, umfasst, wobei das Paar von Propellern (31, 32) von der Welle (53A) der Leistungsturbine (53) durch ein Untersetzungsgetriebe (6, 7) in Drehung angetrieben ist, wobei die Rotationsachse (XX) des Paars von Propellern (31, 32) bezüglich jener (YY) der Leistungsturbine (53) nicht koaxial ist, wobei das Untersetzungsgetriebe (6, 7) ein Differenzialgetriebe (7) und eine erste Stufe (6) umfasst, die ein einfaches Getriebe zwischen der Turbinenwelle (53A) und dem Differenzialgetriebe (7) umfasst, wobei der Lufteinlass des Motors (1) einen Lufteinlassstutzen (11) umfasst, wobei der Lufteinlassstutzen (11) eine Keulenform aufweist, die an die Einheit angrenzt, die von dem einfachen Getriebe und dem Differenzialgetriebe (7) gebildet wird, wobei der Motor **dadurch gekennzeichnet ist, dass** die erste Stufe (6) mit einfachem Getriebe ein erstes Zahnrad (61) umfasst, das mit der Turbinenwelle (53A) fest verbunden ist, wobei das erste Zahnrad (61) in ein zweites Zahnrad (63) der ersten Stufe (6) eingreift, wobei das zweite Zahnrad (63) drehend um die Achse (XX) des Paars von Propellern montiert ist.

2. Motor (1) nach Anspruch 1, **dadurch gekennzeichnet, dass** die Einheit, die aus dem einfachen Getriebe und dem Differenzialgetriebe (7) gebildet ist, auf derselben Seite des Lufteinlassstutzens (11), insbesondere über dem Lufteinlassstutzen (11) in Betriebskonfiguration des Motors (1) liegt.

3. Motor (1) nach Anspruch 1 oder 2, **dadurch gekennzeichnet, dass** die Einheit, die aus dem einfachen Getriebe und dem Differenzialgetriebe (7) gebildet ist, zwischen dem Paar von Propellern (31, 32) und dem Gasgenerator (5) liegt.

4. Motor nach einem der Ansprüche 1 bis 3, **dadurch gekennzeichnet, dass** der Winkel zwischen der Achse (YY) der Leistungsturbine (53) und der Geraden (D), die die Spitze des Verdichters des Gasgenerators mit dem inneren Winkelrohr des Lufteinlassstutzens (11) verbindet, zwischen 20 und 60° liegt.

5. Motor (1) nach einem der Ansprüche 1 bis 4, **dadurch gekennzeichnet, dass** die erste Stufe (6) ein Rad (63) umfasst, das mit einem Planetengetriebe (71) des Differenzialgetriebes (7) verbunden ist.

6. Motor (1) nach einem der Ansprüche 1 bis 5, **dadurch gekennzeichnet, dass** mindestens eines des Differenzialgetriebes (7) und des einfachen Getriebes zweigeteilte Zahnräder, insbesondere axial, umfasst.

7. Motor (1) nach Anspruch 6, **dadurch gekennzeichnet, dass** das einfache Getriebe zwei Räder (62") parallel, die in das Rad, das mit dem Planetengetriebe verbunden ist, eingreifen, umfasst.

8. Motor (1) nach einem der Ansprüche 1 bis 7, **dadurch gekennzeichnet, dass** das Differenzialgetriebe (7) ein Planetengetriebe (71), einen Satelliten-Träger (72P) und einen Kranz (73) umfasst, wobei der Satelliten-Träger mit dem vorgeschalteten Propeller (31) verbunden ist, und der Kranz (73) mit dem nachgeschalteten Propeller (32) des Paars von Propellern (31, 32) verbunden ist.

9. Motor (1) nach einem der Ansprüche 1 bis 7, **dadurch gekennzeichnet, dass** das Differenzialgetriebe (7) ein Planetengetriebe (71), einen Satelliten-Träger (72P) und einen Kranz (73) umfasst, wobei der Satelliten-Träger mit dem nachgeschalteten Propeller (32) und der Kranz mit dem vorgeschalteten Propeller (31) des Paars von Propellern (31, 32) verbunden ist.

10. Motor (1) nach einem der Ansprüche 1 bis 9, **dadurch gekennzeichnet, dass** er eine stationäre Struktur (20) mit einem Stutzen (21) umfasst, wobei ein erstes Wellenelement (32A) über Lager (22) im Inneren des Stutzens getragen wird, wobei das Wellenelement den Kranz mit einem Propeller des Paars von Propellern (31, 32) verbindet.

11. Motor (1) nach Anspruch 10, **dadurch gekennzeichnet, dass** er ein zweites Wellenelement (31A) umfasst, das von Lagern (32I) im Inneren des ersten Wellenelements getragen wird, wobei das zweite Wellenelement den Satelliten-Träger mit dem anderen Propeller des Paars von Propellern (31, 32) verbindet.

12. Motor (1) nach Anspruch 10 oder 11, **dadurch gekennzeichnet, dass** er ein drittes Wellenelement (63A) umfasst, das von Lagern (24) an der stationären Struktur getragen wird, wobei das Wellenelement die erste Untersetzungsstufe mit dem Planetengetriebe verbindet.

13. Motor (1) nach einem der Ansprüche 8 bis 12, **dadurch gekennzeichnet, dass** er eine Hülse (25) umfasst, die Unterstützungselemente enthält, die im Inneren der Wellenelemente untergebracht sind.

14. Motor (1) nach Anspruch 13, **dadurch gekennzeichnet, dass** die Hülse stationär ist.

## Claims

1. Engine (1) comprising a propeller unit with a pair of contrarotating propellers (31, 32), a gas generator (5) supplying a power turbine (53), the pair of propellers (31, 32) being rotationally driven by the shaft (53A) of the power turbine (53) via a speed reduction gearbox (6, 7), the axis of rotation (XX) of the pair of propellers (31, 32) not being coaxial with that (YY) of the power turbine (53), the speed reduction gearbox (6, 7) comprising a differential gearset (7) and a first stage (6) comprising a simple gearset connecting the turbine shaft (53A) and the differential gearset (7), the air intake of the engine (1) comprising an air intake duct (11), the air intake duct (11) being in the shape of a lobe adjacent to the assembly formed by the simple gearset and the differential gearset (7), wherein the first stage (6) with a simple gearset comprises a first toothed wheel (61), integral with the turbine shaft (53A), said first toothed wheel (61) meshing with a second toothed wheel (63) of the first stage (6), said second toothed wheel (63) being mounted so as to rotate about the axis (XX) of the pair of propellers.

2. Engine (1) according to claim 1, **characterised in that** the assembly formed by the simple gearset and the differential gearset (7) is located on the same side of the air intake duct (11), for instance above the air intake duct (11) when the engine (1) is in the operational configuration.

3. Engine (1) according to one of claims 1 to 2, **characterised in that** the assembly formed by the simple gearset and the differential gearset (7) is located between the pair of propellers (31, 32) and the gas generator (5).

4. Engine (1) according to one of claims 1 to 3, **characterised in that** the angle between the axis (YY) of the power turbine (53) and the straight line (D) connecting the apex of the compressor of the gas generator to the inner elbow of the air intake duct (11) is between 20 and 60°.

5. Engine (1) according to one of claims 1 to 4, **characterised in that** the first stage (6) comprises a wheel (63) connected to a planetary gear (71) of the differential gearset (7).

6. Engine (1) according to one of claims 1 to 5, **characterised in that** at least one of the differential gearset (7) and the simple gearset comprises toothed wheels that are duplicated, for instance axially.

7. Engine (1) according to claim 6, **characterised in that** the simple gearset comprises two wheels (62") in parallel meshing with the wheel connected to the planetary gear.

8. Engine (1) according to one of claims 1 to 7, **characterised in that** the differential gearset (7) comprises a planetary gear (71), a planet carrier (72P) and a ring (73), the planet carrier being connected to the upstream propeller (31) and the ring (73) to the downstream propeller (32) of the pair of propellers (31, 32).

9. Engine (1) according to one of claims 1 to 7, **characterised in that** the differential gearset (7) comprises a planetary gear (71), a planet carrier (72P) and a ring (73), the planet carrier being connected to the downstream propeller (32) and the ring to the upstream propeller (31) of the pair of propellers (31, 32).

10. Engine (1) according to one of claims 1 to 9, **characterised in that** it comprises a fixed structure (20) with a sleeve (21), a first shaft member (32A) being supported via bearings (22) inside the sleeve, said shaft member connecting the ring to one propeller of the pair of propellers (31, 32).

11. Engine (1) according to claim 10, **characterised in that** it comprises a second shaft member (31A) supported via bearings (32I) inside the first shaft member, the second shaft member connecting the planet carrier to the other propeller of the pair of propellers (31, 32).

12. Engine (1) according to claim 10 or 11, **characterised in that** it comprises a third shaft member (63A) supported via bearings (24) on the fixed structure, said shaft member connecting the first speed-reduction stage to the planetary gear.

13. Engine (1) according to one of claims 8 to 12, **characterised in that** it comprises a sleeve (25) containing services, housed inside the shaft members.

14. Engine (1) according to claim 13, **characterised in that** the sleeve is fixed.
